Europäisches Patentamt

European Patent Office

Office européen des brevets

(11) Veröffentlichungsnummer: **0 300 210 B1**

(12) **EUROPÄISCHE PATENTSCHRIFT**

(45) Veröffentlichungstag der Patentschrift: **25.03.92**

(21) Anmeldenummer: **88109882.6**

(22) Anmeldetag: **22.06.88**

(51) Int. Cl.⁵: **F16L 3/00**, F16L 43/02

(54) **Rohrhalter.**

(30) Priorität: **20.07.87 CH 2743/87**

(43) Veröffentlichungstag der Anmeldung:
**25.01.89 Patentblatt 89/04**

(45) Bekanntmachung des Hinweises auf die
Patenterteilung:
**25.03.92 Patentblatt 92/13**

(84) Benannte Vertragsstaaten:
**AT DE FR IT NL**

(56) Entgegenhaltungen:
**EP-A- 0 005 625      EP-A- 0 276 191
DD-A- 230 055        DE-A- 3 628 326
DE-U- 8 522 996      GB-A- 1 520 528
GB-A- 2 173 275**

(73) Patentinhaber: **DOMOTEC AG
Bahnhofstrasse 61
CH-4663 Aarburg(CH)**

(72) Erfinder: **Gerhard, Hans
Hintere Breite 2
CH-4850 Brittnau(CH)**

(74) Vertreter: **Keller, Hartmut et al
Hartmut Keller Dr. René Keller Postfach 12
CH-3000 Bern 7(CH)**

Rank Xerox (UK) Business Services

**Beschreibung**

Die Erfindung bezieht sich auf einen Rohrhalter nach dem Oberbegriff des Patentanspruchs 1, wobei das Rohr vorzugsweise ein Schutzrohr, z. B. für ein Wasserleitungsrohr, ist.

Ein Rohrhalter dieser Art ist in der einen Stand der Technik nach Artikel 54(3) EPÜ darstellenden EP-A-0 276 191 beschrieben. Der darin beschriebene Rohrhalter hat einen kastenförmigen, unten offenen und oben durch einen Deckel abgeschlossenen Hohlkörper, der mit seiner Grundfläche auf die Unterlage eines zu betonierenden Bauteils gestellt und in der gewünschten Lage fixiert wird. Eine der Seitenwände des kastenförmigen Hohlkörpers ist in einem kleinen Abstand von der Grundfläche mit muffenförmigen Einführungen versehen, durch welche flexible Schutzrohre horizontal (parallel zur Grundfläche und Unterlage) in den Kastenhohlraum eingeführt werden. Nach dem Einbetonieren des Hohlkörpers mit den Schutzrohren werden durch die Schutzrohre hindurch verlaufende, flexible Wasserleitungsrohre an der Oberseite des Betonbauteils herausgezogen, wobei sie im Hohlkörper durch eine Niederhalterrolle in einem kreisbogenförmig zum Rand des Deckels verlaufenden Führungsteil gehalten und durch Durchführungslöcher des Deckels hindurchgeführt werden.

Das horizontale Einführen der Rohre in den Hohlkörper knapp über der Unterlage (Schalung) des zu betonierenden Bauteils ist mühsam und die Zwangsführung des Rohrs auf einem kreisbogenförmigen Weg vermeidet zwar die (sonst wegen der rechtwinkligen Richtungsänderung) bestehende Gefahr eines Knickens des Rohrs, ist aber aufwendig und erschwert das Herausgreifen des Rohrs aus dem Hohlkörper.

Bei einem aus dem DE-U1 85 22 996.2 bekannten Rohrhalter verläuft eine Rinne mit U-Profil, in die das Rohrende gelegt und an der es befestigt werden muss, bogenförmig nach unten zu einer an der Grundfläche vorgesehenen Hülse. Dabei bestimmt die Bogenform der Rinne die Krümmung des Rohrendes und verhindert, besonders im Falle eines Schutzrohres, einen zu kleinen Krümmungsradius, bei dem das Leitungsrohr nicht mehr durch das Schutzrohr gezogen werden könnte.

Bei einer ersten Ausführungsart nach der DE-U1 85 22 996.2 überragt die Hülse die Grundfläche nach unten. Dabei muss die Schalung mit einer durchgehenden Bohrung für die Hülse versehen werden. Das Rohr- insbesondere Schutzrohrende ragt dann aus der Schalung und nach dem Betonieren und Ausschalen aus dem Betonteil heraus. Diese Ausführungsart hat den Nachteil, dass die durchbohrten Schalungsbretter nicht ohne weiteres wiederverwendbar sind.

Bei einer anderen Ausführungsart nach der DE-U1 85 22 996.2 endet die Hülse an der Grundfläche, und es ist ein Verlängerungsstück für die Hülse vorgesehen, das nach dem Betonieren und Ausschalen mit der Hülse verbunden wird und so ausgeführt ist, dass in der durch das Verlängerungsstück verlängerten Hülse das Schutzrohrende mit einem weiterführenden Schutzrohr verbunden werden kann. Diese zweite Ausführungsart hat gegenüber der ersten den Vorteil, dass die Schalungsbretter nicht durchbohrt werden müssen und nach dem Ausschalen ohne weiteres wieder verwendbar sind. Diesem Vorteil steht aber der Nachteil gegenüber, dass der Rohrhalter wegen des Verlängerungsstückes und der Ausführung, die es ermöglicht, das Rohrende in der verlängerten Hülse mit dem führenden Rohr zu verbinden, komplizierter und seine Verwendung wegen der Ausführung dieser Verbindung umständlicher ist.

Rohrhalter sind auch als sogenannte Schalungsbalken oder Schalungskästen bekannt, die über Ausschnitte der Schalung gesetzt werden und die Rohre in Bohrungen geführt halten (Optiflex-System der Firma Nussbaum, CH-Olten). Bei diesen Schalungsbalken und Schalungskästen besteht, wie in der Einleitung der DE-U1 85 22 996.2 erläutert, das Problem des Knickens der Leitungen, da eine Richtungsänderung um einen rechten Winkel erforderlich ist.

Durch die Erfindung, wie sie im Patentanspruch 1 gekennzeichnet ist, wird die Aufgabe gelöst, einen Rohrhalter der eingangs genannten Gattung zu schaffen, der das Einführen des Rohrs erleichtert, für den die Schalung weder durchbohrt noch mit einem Ausschnitt versehen werden muss, und der es trotzdem ermöglicht, dass nach dem Ausschalen ein Endstück des Rohres aus dem Bauteil herausbiegbar ist, ohne dass die Gefahr eines Knickens des Rohrs infolge übermässiger Biegung besteht oder ihr durch eine aufwendige Konstruktion begegnet werden muss.

Beim erfindungsgemässen Rohrhalter wird das Rohr bequem schräg von oben eingeführt und nach dem Ausschalen aus dem Hohlraum heraus nach unten gebogen, gegebenenfalls nachdem ein den Hohlraum an der Grundfläche abschliessender Teil entfernt oder zerstört wurde, wobei der Rohrkrümmungsradius wegen der schrägen Einführung grösser als bei horizontaler Einführung und die Knickgefahr mithin verringert ist. Mit den Ausführungsarten nach Patentanspruch 2 und namentlich nach Patentanspruch 3 wird in Weiterbildung der Erfindung sichergestellt, dass der Krümmungsradius des gebogenen Rohres einen Minimalwert nicht unterschreitet.

Die durch die Erfindung erreichten Vorteile sind im wesentlichen darin zu sehen, dass der Rohrhalter konstruktiv einfach und daher preisgünstig, z. B. aus Kunststoff, herstellbar ist, bei seiner Verwendung die Schalung nicht durchbohrt oder mit einem Ausschnitt versehen werden muss, die Schalungsbretter also ohne weiteres wieder verwendbar sind, und trotzdem eine bequeme Einführung des Rohrs von oben (in den Hohlraum) und ein verhältnismässig grosser Krümmungsradius beim Herausbiegen des Rohrendes nach dem Ausschalen aus dem Hohlraum gewährleistet ist. Mit den genannten Ausführungsarten nach den Patentansprüchen 2 und 3 wird weiter ein bestimmter Biegungsradius sichergestellt, jedenfalls nicht unterschritten.

Weitere Ausführungsarten des erfindungsgemässen Rohrhalters sind in den übrigen abhängigen Patentansprüchen angegeben; durch sie erzielte Vorteile sind aus der folgenden Beschreibung ersichtlich.

Im folgenden wird die Erfindung anhand der beiliegenden, lediglich zwei Ausführungswege darstellenden Zeichnungen näher erläutert. Es zeigen:

Fig. 1 eine Seitenansicht einer ersten Ausführungsform des Rohrhalters,

Fig. 2 eine Draufsicht zu Fig. 1,

Fig. 3 einen Längsschnitt nach der Linie III-III in Fig. 2,

Fig. 4 einen Querschnitt nach der Linie IV/IV in Fig. 1,

Fig. 5 einen Querschnitt nach der Linie V-V in Fig. 1, in grösserem Massstab,

Fig. 6 eine Seitenansicht einer zweiten Ausführungsform des Rohrhalters, im Schnitt nach der Linie VI/VI in Fig. 7,

Fig. 7 eine Draufsicht auf zwei in einem Abstand angeordnete Rohrhalter nach Fig. 6.

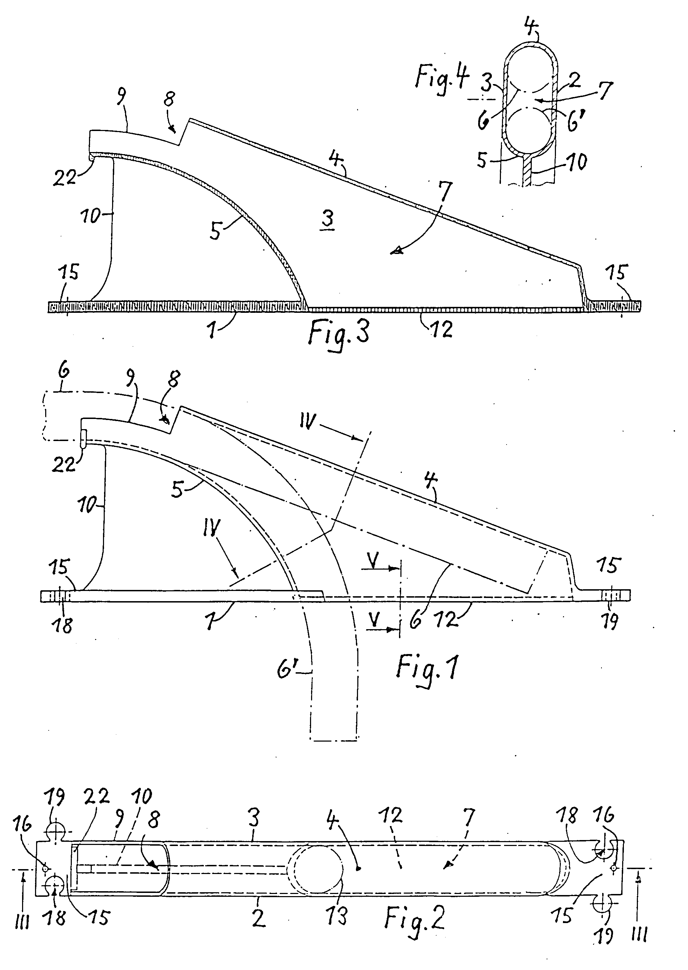

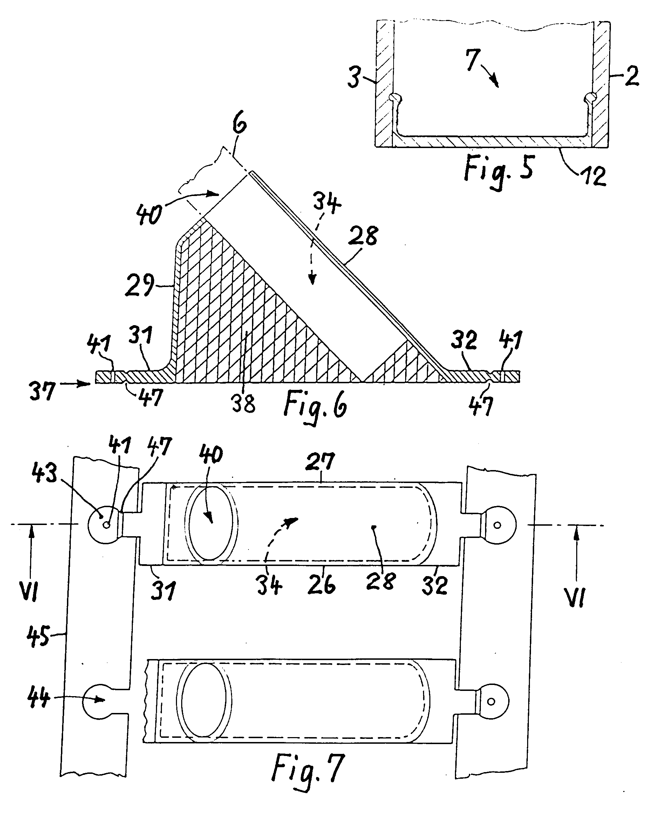

Der in Fig. 1-5 dargestellte Rohrhalter besteht in seinem grundsätzlichen Aufbau aus einer Grundplatte 1, zwei Seitenwänden 2 und 3, einer oberen, vorderen Wand 4 und einer Rückwand 5. Die Vorderwand 4 hat ein halbkreisförmiges Rinnenprofil, dessen offene Seite unten ist, sie verläuft in einem spitzen Winkel von beispielsweise 20° zur Grundplatte 1. Die Rückwand 5 hat dasselbe halbkreisförmige Profil, dessen offene Seite oben ist, sie verläuft unterhalb der Vorderwand kreisbogenförmig zur Grundplatte 1 mit der konkaven Seite des Bogens dieser zugewandt, wobei der Bogen kürzer als die Länge der Vorderwand 4 ist. Das hintere (in der Zeichnung linke) Ende der Vorderwand 4 und der Rückwand 5 begrenzen zusammen eine Oeffnung 8, durch die das Rohr 6 in den Raum 7 zwischen den Wanden 2-5 eingeführt werden kann. Dabei ist die Rückwand 5 vor der Oeffnung 8 rückwärts verlängert und bildet dort ein Führungs- und Stützglied 9, an dem das Rohr 6 zur Oeffnung 8 zu führen und danach zu stützen ist. Die Rückwand 5 und das Führungs- und Stützglied 9 sind mittels eines rippenartigen Teiles 10 an einem hinteren Teil der Grundplatte 1 abgestützt. Die Seitenwände 3 und 4 sind entsprechend dem Verlauf der Vorderwand 4 und Rückwand 5 dreieckig mit einer bogenförmigen Dreieckseite, und sie sind parallel, wobei ihr Abstand dem Durchmesser der Oeffnung 8, d.h. dem Aussendurchmesser des Rohres 6 mit Spiel angepasst ist. Die Grundplatte 1 hat in dem Bereich, der an die Seitenwände 2 und 3 anschliesst, einen herausnehmbaren Einsatz 12, der beispielsweise nach Fig. 5 oder mit (nicht dargestellten) Sollbruchstellen ausgeführt ist, so dass er (nach dem Ausschalen) in den zwischen den Wänden 2-5 umschlossenen Raum 7 gedrückt und herausgenommen werden kann, um diesen Raum zugänglich zu machen. Der Einsatz 12 kann nahe seinem in Fig. 1 und 2 linken Ende mit einer Sollbruchstelle 13 ausgeführt sein. Dann kann der Einsatz 12 nach dem Abbrechen dieses Endes wieder eingesetzt werden, wenn das Rohr 6 so aus dem Hohlraum des Rohrhalters herausgebogen wurde, dass es an der Rückwand 5 anliegt, wie in Fig. 1 mit 6' bezeichnet. Das Rohr ist dann in diesem gebogenen Zustand am abgebrochenen und wieder eingesetzten Einsatz 12 gehalten, und der Hohlraum des Rohrhalters ist wieder abgeschlossen. Die Grundplatte 1 hat die übrigen Teile des Rohrhalters überragende Enden 15, die mit Löchern 16 für Nägel zum Annageln des Rohrhalters an die Schalung versehen sind. An jedem Ende 15 der Grundplatte 1 sind eine Aussparung 18 und dieser gegenüber ein Ansatz 19 gebildet, der der Aussparung 18 angepasst ist, wodurch nebeneinander angeordnete Rohrhalter formschlüssig schubfest miteinander verbunden werden können. Jeder der beiden Längsränder der Grundplatte 1 ist an einem Ende mit der Aussparung 18 und am anderen mit dem Ansatz 19 versehen. Dies ermöglicht es, nebeneinander angeordnete Rohrhalter auch dann formschlüssig miteinander zu verbinden, wenn der eine in Bezug auf den anderen um 180° in der Schalungsebene gedreht ist. Dies ist erforderlich, wenn Rohre in entgegengesetzten Richtungen zu den Rohrhaltern führen. Der Rohrhalter kann aus einem Stück bestehen oder beispielsweise aus zwei symmetrischen Halbschalen zusammengesetzt sein. Er kann auch für mehrere Rohre mit einem entsprechend grösseren Abstand der Seitenwände 2 und 3 ausgeführt werden.

Zum Gebrauch wird der Rohrhalter mit seiner Grundplatte 1 auf die Innenseite der (nicht dargestellten) Schalung gesetzt und mit Nägeln, für welche die Löcher 16 vorgesehen sind, an die Schalung genagelt. Das Rohr 6 wird in das rinnenförmige Führungs- und Stützglied 9 gelegt und durch die Oeffnung 8 in den Hohlraum 7 gestossen, bis es an das in Fig. 1 und 2 rechte Ende der Vorderwand 4 anstösst. Gewünschtenfalls kann an der Oeffnung 8 oder am Ende des Stützgliedes 9 ein Befestigungsmittel vorgesehen werden, um das Rohr dort festzuhalten. Beispielsweise kann ein Band um das Rohr 6 und das Stützglied 9 an dessen den Teil 10 überragenden Ende gelegt werden, wo es durch eine Wulst 22 gegen Abgleiten gesichert ist. Als Band ist beispielsweise ein sogenannter Kabelbinder geeignet, der aus einem Kunststoffband mit als Widerhaken geformten Zähnen und einem Verschlussstück mit angepasster Verzahnung besteht. Natürlich kann beispielsweise auch Bindedraht verwendet, eine Rohrschelle vorgesehen oder die Oeffnung mit Widerhaken ausgerüstet werden, die ein Zurückziehen des Rohres 6 verhindern. Um ein Eindringen des Frischbetons an der Oeffnung 8 zu verhindern, kann diese mit einer Dichtung, beispielsweise einer Dichtungsmanschette ausgerüstet sein.

Beim Ausschalen nach dem Betonieren löst sich der zusammen mit dem Rohr einbetonierte Rohrhalter von selbst von der Schalung, weil diese von den Nägeln abgezogen wird. Nach dem Ausschalen wird der Einsatz 12 der Grundplatte 1 eingedrückt und herausgenommen. Der Hohlraum 7 ist dann zugänglich, so dass das Rohrendstück 6′ herausgebogen werden kann, wobei es sich an die Innenseite der Rückwand 5 legt, wodurch der Biegungsradius des Rohrendteils nicht unzulässig unterschritten werden kann. Das Rohrendstück 6′ ragt nun aus dem Hohlraum des Rohrhalters heraus, weil die an das Stützglied 9 anschliessende gekrümmte Rückwand 5 kürzer als die Vorderwand 4 ist. Gewünschtenfalls kann ein Ende des Einsatzes 12 - wie vorher erwähnt - abgebrochen und der verbleibende Teil des Einsatzes 12 wieder eingesetzt werden, um den Hohlraum zu schliessen und das Rohrendstück 6′ am in Fig. 1 unteren Ende der Rückwand 5 zu halten.

Die in Fig. 6 und 7 dargestellte Ausführungsart des Rohrhalters hat ebenso wie die erste (Fig. 1 bis 5) zwei Seitenwände 26 und 27, eine schräge rinnenförmige Vorderwand 28 und eine Rückwand 29 aber keine Grundplatte sondern lediglich zwei Laschen 31 und 32 zum Befestigen an der Schalung. Zwischen der Vorderwand 28 und den an diese angrenzenden Teilen der Seitenwände 26 und 27 ist ein Hohlraum 34 zur Aufnahme des Endes des Rohres 6 gebildet. Der Raum zwischen den restlichen Teilen der Seitenwände 26 und 27, der Rückwand 28 und der Bodenflächenebene 37 ist durch einen Füllkörper 38 ausgefüllt, der aus leicht zerstörbaren, insbesondere zerbröckelbarem Material besteht. Am oberen Ende der Vorderwand 28 und Rückwand 29 ist eine Oeffnung 40 zum Einführen des Rohrendteils 35 gebildet, die entsprechend der Oeffnung 8 der ersten Ausführungsform (Fig. 1 und 2) mit einem Befestigungsmittel und mit einer Dichtungsmanschette für das Rohr versehen werden kann. Die Laschen 31 und 32 haben Löcher 41 zum Annageln und Ansätze 43, die je in eine von mehreren Aussparungen 44 einer Lehre 45 passen, mit der mehrere Rohrhalter in einem bestimmten Abstand voneinander montiert werden können. Die Löcher 41 sind in den Ansätzen 43 angeordnet. Zwischen jeder Lasche 31, 32 und ihrem Ansatz 43 ist eine Sollbruchstelle 47 vorgesehen, an welcher der Ansatz 43 beim Ausschalen des Betonbauteils vom Rohrhalter abbricht. Dies hat den Vorteil, dass dann keine Nägel am Betonbauteil vorstehen. Selbstverständlich können die Laschen 31 und 32 auch so wie die Enden 15 der Grundplatte 1 der ersten Ausführungsart (Fig. 2) und diese Enden auch so wie die Laschen 31 und 32 und auch unabhängig davon mit Sollbruchstellen ausgeführt werden.

Beim Gebrauch der zweiten Ausführungsart des Rohrhalters (Fig. 6 und 7) wird der aus leicht zerstörbarem, insbesondere zerbröckelbarem Material, z.B. Kunststoff der Markenbezeichnung Styropor, bestehende Füllkörper 38 nach dem Ausschalen zerstört und entfernt, beispielsweise mittels eines geeigneten Werkzeugs (es genügt ein Schraubenzieher) herausgekratzt, woraufhin das Rohrende aus dem Rohrhalter heraus gebogen werden kann, so dass es (so wie in Fig. 1) aus diesem herausragt. Auch der Rohrhalter dieser Ausführungsart kann aus Kunststoff, abgesehen vom Füllkörper beispielsweise aus einem Stück oder aus zwei Halbschalen gebildet sein.

## Patentansprüche

1. Rohrhalter für wenigstens ein flexibles Rohr, mit einem mit seiner Grundfläche (37) an der Innenseite einer Schalung für einen zu betonierenden Bauteil lösbar zu befestigenden Hohlkörper (2-5; 26-29), der eine in einem Abstand von der Grundfläche angeordnete Einführung (8; 40) zum im wesentlichen geraden Einführen des Rohrs (6) in den Hohlraum (7; 34) aufweist und zusammen mit dem Rohr (6) einzubetonieren ist, so dass das Rohrende (6') nach dem Ausschalen an der Aussenseite des Betonbauteils zum Herausbiegen des Rohrs zugänglich ist, dadurch gekennzeichnet, dass die Einführungsachse in einem spitzen Winkel zur Grundfläche (37) hin geneigt ist und von der Einführung (8; 40) eine zur Grundfläche (37) hin konvergierende Rohrführungswand (4; 28) ausgeht, welche das Rohr bis an die Grundfläche (37) heranführt und an der Grundfläche (37) offen oder durch einen ausbrechbaren oder lösbaren Bodenteil (12, 13) oder einen zerbröckelbaren Körper (38) geschlossen ist.

2. Rohrhalter nach Anspruch 1, dadurch gekennzeichnet, dass die mit der Grundfläche (37) konvergierende Rohrführungswand (4; 28) des Hohlkörpers (2-5; 26-29) ein an die obere Hälfte der Einführung (8; 40) anschliessendes Rinnenprofil hat.

3. Rohrhalter nach Anspruch 1 oder 2, dadurch gekennzeichnet, dass der Hohlkörper (2-5; 26-29) eine von der Einführung (8; 40) bogenförmig bis an die Grundfläche (37) verlaufende Wand (5) hat, die zweckmässig ein an die untere Hälfte der Einführung (8; 40) anschliessendes Rinnenprofil hat.

4. Rohrhalter nach einem der Ansprüche 1 bis 3, dadurch gekennzeichnet, dass der Hohlkörper (2-5; 26-29) zwei parallele, zur Grundfläche senkrechte Seitenwände (2, 3; 26, 27) hat, in deren Zwischenraum die Einführung (8; 40) führt.

5. Rohrhalter nach einem der Ansprüche 1 bis 4, dadurch gekennzeichnet, dass ein Stück des lösbaren Bodenteils (12) an einer Sollbruchstelle (13) abbrechbar und der nach dem Abbrechen verbleibende Rest wieder einsetzbar ist, um den Hohlkörper neben dem aus ihm herausgebogenen Rohrendstück (6') zu schliessen.

6. Rohrhalter nach einem der Ansprüche 1 bis 4, dadurch gekennzeichnet, dass eine Fläche des zerbröckelbaren Körpers (38) in einem dem Durchmesser der Einführung (40) mindestens entsprechenden Abstand parallel zu der mit der Grundfläche (37) konvergierenden Rohrführungswand (28) des Hohlkörpers (26-29) verläuft.

7. Rohrhalter nach einem der Ansprüche 1 bis 6, gekennzeichnet durch ein vor der Einführung (8; 40) angeordnetes, rinnenförmiges Stütz- oder Führungsglied (9) für das Rohr (6).

8. Rohrhalter nach einem der Ansprüche 1 bis 7, dadurch gekennzeichnet, dass die Einführung (8; 40), mit Befestigungsmitteln für das Rohr, z. B. mit einer Rohrschelle oder einem Binder mit Verschluss ausgerüstet oder zum zugfesten Halten des Rohres mit Widerhaken ausgeführt ist.

9. Rohrhalter nach einem der Ansprüche 1 bis 8, gekennzeichnet durch an seiner Grundfläche (37) angeordnete, Ansätze (41), die zum Befestigen an der Schalung und mit Sollbruchstellen (47) ausgeführt sind, so dass sie beim Ausschalen des Betonbauteils abbrechen.

10. Rohrhalter nach einem der Ansprüche 1 bis 9, gekennzeichnet durch an seiner Grundfläche (37) angeordnete Ansätze (18, 19; 43) zum schubfesten, formschlüssigen Verbinden nebeneinander angeordneter Rohrhalter miteinander oder mit einer Montagelehre (45).

**Claims**

1. Pipe support for at least one flexible pipe, with a hollow body (2-5; 26-29) the base surface (37) of which may be detachably secured to the inner surface of a mould for a construction element to be concreted, the pipe support comprising an insertion opening (8; 40) which is disposed at a distance from the base surface for the pipe (6) to be inserted in a substantially straight line into the hollow space (7; 34) and is to be embedded in concrete together with the pipe (6), such that the pipe end (6') is accessible at the outer surface of the concrete construction element for bending the pipe outwards after removing the mould, characterised in that the axis of insertion is inclined at an acute angle towards the base surface (37) and from the insertion opening (8; 40) a pipe guiding wall (4; 28) extends which converges with the base surface (37), which pipe guiding wall guides the pipe to the base surface (37) and is open at the base surface (37) or is closed by a base part (12, 13) which can be destroyed or detached or by a body (38) which can be crumbled.

2. Pipe support according to claim 1, characterised in that the pipe guiding wall (4; 28) of the hollow body (2-5; 26-29) which converges with the base surface (37) has a channelled profile which links up with the upper half of the insertion opening (8; 40).

3. Pipe support according to claim 1 or 2, characterised in that the hollow body (2-5; 26-29) has a wall (5) which extends in a curved manner from the insertion opening (8; 40) to the base surface (37) and in an advantageous manner comprises a channelled profile which links up with the lower half of the insertion opening (8; 40).

4. Pipe support according to any one of claims 1 to 3, characterised in that the hollow body (2-5, 26-29) has two parallel lateral walls (2, 3; 26, 27) which are perpendicular to the base surface of the space into which the insertion opening (8; 40) leads.

5. Pipe support according to any one of claims 1 to 4, characterised in that one piece of the detachable base part (12) can be broken at a predetermined breaking point (13) and the rest which remains after breaking can be reinserted in order to close the hollow body at the point next to the pipe end piece (6') which bends out.

6. Pipe support according to any one of claims 1 to 4, characterised in that a surface of the body (38) which can be crumbled extends at a distance which corresponds at least to the diameter of the insertion opening (40), parallel to the pipe guiding wall (28) of the hollow body (26-29) which converges with the base surface (37).

7. Pipe support according to any one of claims 1 to 6, characterised by a channel-shaped support or guide member (9) for the pipe (6) which is disposed in front of the insertion opening (8; 40).

8. Pipe support according to any one of claims 1 to 7, characterised in that the insertion opening (8; 40) is provided with securing means for the pipe, for example a pipe clip or a fastening with a seal or with barbs for tension-resisting support of the pipe.

9. Pipe support according to any one of claims 1 to 8, characterised by attachments (41) which are disposed on its base surface (37) and are designed to be secured to the mould and provided with predetermined breaking points (47) such that they break when the concrete construction part is removed from the mould.

10. Pipe support according to any one of claims 1 to 9, characterised by attachments (18, 19; 43) which are disposed on its base surface (37) such that adjacent pipe supports may be connected to one another or to an assembly frame (45) in a shear-resistant and locking manner.

**Revendications**

1. Fixation de tuyau destinée à au moins un tuyau flexible, comprenant un corps creux (2-5; 26-29) destiné à être fixé de façon amovible par sa surface de base (37) sur le côté interne d'un coffrage d'un élément de construction à bétonner, qui comprend une ouverture d'introduction (8; 40) disposée à une certaine distance de la surface de base en vue de l'introduction sensiblement en ligne droite du tuyau (6) dans la cavité (7; 34) et qui est noyé dans le béton en même temps que le tuyau (6), de manière que l'extrémité (6') du tuyau soit accessible sur le côté externe de l'élément de construction en béton pour courber le tuyau après le retrait du coffrage, caractérisée en ce que l'axe d'introduction est incliné en formant un angle aigu avec la surface de base (37) et une paroi de guidage de tuyau (4; 28) part de l'ouverture d'introduction (8; 40) en convergeant en direction de la surface de base (37), paroi qui guide le tuyau jusqu'à la surface de base (37) et est ouverte au niveau de la surface de base (37) ou fermée par un élément de fond (12, 13) amovible et pouvant être retiré ou par un corps (38) pouvant être réduit en menus fragments.

2. Fixation de tuyau selon la revendication 1, caractérisée en ce que la paroi de guidage de tuyau (4; 28) du corps creux (2-5; 26-29) qui converge vers la surface de base (37) comprend un profil en rigole qui se raccorde à la moitié supérieure de l'ouverture d'introduction (8; 40).

3. Fixation de tuyau selon la revendication 1 ou 2, caractérisée en ce que le corps creux (2-5; 26-29) comprend une paroi (5) allant de l'ouverture d'introduction (8; 40) sous une forme courbe jusqu'à la surface de base (37), cette paroi ayant avantageusement un profil en rigole qui se raccorde à la moitié inférieure de l'ouverture d'introduction (8; 40).

4. Fixation de tuyau selon l'une quelconque des revendications 1 à 3, caractérisée en ce que le corps creux (2-5; 26-29) comprend deux parois latérales (2, 3; 26, 27) qui sont parallèles et perpendiculaires à la surface de base, l'ouverture d'introduction (8; 40) étant dirigée vers l'espace intermédiaire qu'elles forment.

5. Fixation de tuyau selon l'une quelconque des revendications 1 à 4, caractérisée en ce qu'une partie de l'élément de fond amovible (12) peut être brisée au niveau d'une position de rupture de consigne (13) et la partie restante peut être à nouveau utilisée après rupture de manière à fermer le corps creux à proximité de l'élément d'extrémité de tuyau (6') qui est courbée et en sort.

6. Fixation de tuyau selon l'une quelconque des revendications 1 à 4, caractérisée en ce qu'une surface du corps (38) pouvant être réduite en menus fragments est disposée parallèlement à la paroi de guidage de tuyau (28) du corps creux (26-29) qui converge avec la surface de base (37) à une distance correspondant au moins au diamètre de l'ouverture d'introduction (40).

7.  Fixation de tuyau selon l'une quelconque des revendications 1 à 6, caractérisée par un organe d'appui ou de guidage (9) en forme de rigole pour le tuyau (6), disposé à l'avant de l'ouverture d'introduction (8; 40).

8.  Fixation de tuyau selon l'une quelconque des revendications 1 à 7, caractérisée en ce que l'ouverture d'introduction (8; 40) est équipée de moyens de fixation pour le tuyau, par exemple d'une coquille ou d'un lien comprenant une fermeture, ou est équipée de crochets pour maintenir le tuyau de façon à résister à une traction.

9.  Fixation de tuyau selon l'une quelconque des revendications 1 à 8, caractérisée par des saillies (43) disposées sur sa surface de base (37), qui sont prévues pour la fixation sur le coffrage et munies de positions de rupture de consigne (47) de façon à se briser lors du retrait du coffrage de l'élément de construction en béton.

10. Fixation de tuyau selon l'une quelconque des revendications 1 à 9, caractérisée par des formations (18, 19; 43) disposées sur sa surface de base (37) pour réaliser une liaison résistant à une traction par concordance de formes de fixations de tuyaux disposées l'une contre l'autre ou raccordées à un gabarit de montage (45).

Fig.4

Fig.3

Fig.1

Fig.2

Fig. 5

Fig. 6

Fig. 7